# EUROPÄISCHE PATENTANMELDUNG

(11) **EP 3 498 408 A1**
(43) Veröffentlichungstag der Anmeldung: **19.06.2019**
(21) Anmeldenummer: 18212489.1
(22) Anmeldetag: 13.12.2018
(51) Int. Cl.: B23G 1/34, B23C 3/32, B23C 5/28, B23Q 11/10

(54) **WIRBELAPPARAT, WERKZEUGAUFNAHME UND VORRICHTUNG ZUR WEITERLEITUNG EINES FLUIDES**

(30) Priorität: 14.12.2017 DE 102017130056
(71) Anmelder: Flam, Mirko, 72636 Tischardt (DE)
(72) Erfinder: Flam, Mirko, 72636 Tischardt (DE)
(74) Vertreter: Fürst, Siegfried

(57) **Zusammenfassung**

Die Erfindung betrifft einen Wirbelapparat (1) für eine spanabhebende Werkzeugmaschine mit einem Gehäuse, mindestens einer Getriebestufe, Lagern und Dichtungen, wobei der Wirbelapparat (1) ein Wirbelwerkzeug (2) mit Schneidplatten (3) aufweist, deren aktive Werkzeugschneiden (4) zur Außenbearbeitung eines Halbzeuges (21), vorzugsweise eines zylindrischen Halbzeuges (21), nach radial innen gerichtet sind, wobei ein Fluid zur Kühlung und/oder Schmierung zu den Schneideplatten (3) geführt wird, wobei das Fluid über sich drehende und über statische Bauteile des Wirbelapparates (1) in das Wirbelwerkzeug (2) und von dort zu den Schneidplatten (3) geleitet wird..Die Erfindung betrifft zudem eine Werkzeugaufnahme und eine Vorrichtung zur Weiterleitung eines Fluides.

## Beschreibung

Die Erfindung betrifft einen Wirbelapparat mit einem Wirbelwerkzeug in einer spanabhebenden Werkzeugmaschine gemäß dem Oberbegriff des Anspruches 1 sowie eine Werkzeugaufnahme in einer spanabhebenden Werkzeugmaschine gemäß dem Oberbegriff des Anspruches 12.

Aus dem Stand der Technik ist die Wirbeltechnik bekannt. Bei dieser Technik rotiert ein ringförmiges Werkzeug um das stabförmige Werkstück herum. Am Innendurchmesser des Werkzeuges angebrachte Schneidplatten weisen zum Werkstück hin. Die Drehzahl des Werkzeuges ist hierbei sehr hoch (1000/min oder mehr), die Drehzahl des Werkstückes ist jedoch sehr gering (meist kleiner als 60/min). Weiterhin weisen das Werkzeug und das Werkstück einen Versatz zueinander auf, so dass der Flugkreis der Schneidplatten einen sichelförmigen Ausschnitt aus dem Werkstück heraus schneidet.

In Verbindung mit der geringen Drehbewegung des Werkstückes und einem Vorschub des Werkzeuges und/oder des Werkstückes können vielfältige Schneckengänge in das Werkstück geschnitten werden.

Die wohl häufigste geschnittene Form ist das Gewinde. Weil durch die hohe Drehzahl des Werkzeuges sehr feine Späne entstehen (ca. 0,050 mm), weist die Oberfläche des Schneckenganges oder des Gewindes eine hohe Glätte bzw. eine geringe Rauigkeit auf. Ein anschließendes Feinschleifen ist deshalb nicht erforderlich. Aus diesem Grunde werden mittels Wirbeltechnik auch hochwertige Knochenschrauben - also chirurgische Schrauben - hergestellt.

Es sei hier noch erwähnt, dass das Wirbel-Gewindeschneiden viele weitere technische Aspekte hat. So kann der Wirbelkopf - bzw. das Wirbelwerkzeug - zur Längsachse des Werkstückes, in der Eingriffsstelle um den Steigungswinkel des Gewindes geneigt sein.

Weiterhin können am inneren Umfang des Werkzeuges Schneidplatten Verwendung finden, die identisch sind, also keinen Versatz in Richtung Längsachse des Werkzeuges aufweisen.

Es gibt aber auch Schneidplattenanordnungen, bei denen die Geometrie der Schneiden gewissermaßen selber einen Schraubengang darstellt, um die Größe der Späne zu reduzieren.

Für die Gestaltung eines Wirbelwerkzeuges sei hier auf die Schrift DE 10 2015115 310 A1 verwiesen. Aus der Schrift DE 35 32 282 A1 ist ein weiteres Wirbelwerkzeug bekannt.

Aus dem Stand der Technik ist auch bekannt, dass zum Kühlen der Werkzeuge und/oder als Schneidmittel und/oder als Transportmittel für sich anhäufende Späne, Schneidöle oder Bohremulsionen verwendet werden. Diese Fluide werden mittels fester Rohrleitungen oder flexibler Spiralschläuche an das Werkstück heran oder in dessen unmittelbare Nähe geleitet. Ein großes Problem ist es hierbei, dass die Späne nicht gut genug abgeführt werden und/oder der Schneidvorgang nicht genügend gekühlt und/oder geschmiert wird. Auch kann es zu regelrechten Späne-Zusammenballungen kommen. Dieses führt dann wieder zu Riefen auf der Werkstückoberfläche oder sogar zur Deformation des Werkstückes.

Es ist deshalb Aufgabe der Erfindung eine verbesserte Anordnung zuschaffen, mit welcher diese Probleme zumindest reduziert werden können.

Die Aufgabe wird durch einen Wirbelapparat mit den kennzeichnenden Merkmalen des Anspruches 1 in Kombination mit den Merkmalen seines Oberbegriffs gelöst oder durch eine Werkzeugaufnahme mit den kennzeichnenden Merkmalen des Anspruches 12 in Kombination mit den Merkmalen seines Oberbegriffs.

Die Erfinder haben einen Weg gefunden, wie man das Fluid möglichst punktgenau zum Schneidprozess leiten kann. Dieses ist deshalb so schwierig, weil ein Kanal oder eine Bohrung für das Fluid ausreichend Platz benötigt, aber auf der anderen Seite viele andere Bauteile (Schrauben, Schneidplatten, rotierende Bauteile) schon den erforderlichen Platz belegen. Hinzu kommt die Schwierigkeit, dass das Fluid mit einem Druck von 100 bis 200 bar beaufschlagt ist und deshalb ein Kanal oder eine Bohrung auch eine ausreichende Stabilität benötigt. Durch die Erfindung lässt sich die Produktivität steigern, d.h. höhere Drehzahlen, einen höheren Ausstoß an Teilen und längere Standzeiten der Schneidplatten sind möglich.

Im Rahmen der Erfindung ist unter dem Begriff Bohrung jede Form von Kanal, Rille, Tasche oder Ähnliches zu verstehen, sofern ein geschlossener Querschnitt vorliegt. Aus dem Stand der Technik ist bekannt, dass das Wirbelwerkzeug stirnseitig an einem Hohlrotor des Wirbelapparates angebracht ist.

Gemäß der Erfindung wird nunmehr das Fluid zunächst in den Wirbelapparat und von dort in das Wirbelwerkzeug zu den Schneiden der Schneidplatten geleitet.

Dieser Wirbelapparat für eine spanabhebende Werkzeugmaschine weist u.a. ein Gehäuse, mindestens eine Getriebestufe, Lager und Dichtungen auf, wobei dieser Wirbelapparat ein Wirbelwerkzeug mit Schneidplatten hat, deren aktive Werkzeugschneiden zur Außenbearbeitung eines Halbzeuges, vorzugsweise eines zylindrischen Halbzeuges, nach radial innen gerichtet sind. Zur Kühlung und/oder Schmierung wird ein Fluid direkt zu den Schneideplatten hin geführt, also in den Wirbelapparat hinein, sodass das Fluid von innen kommend nach außen drängt. Hierdurch werden die bei der Bearbeitung des Werkstückes innen entstehenden Späne von innen nach außen herausgeführt. Gemäß der Erfindung wird das Fluid über sich drehende und statische Bauteile des Wirbelapparates in das Wirbelwerkzeug und von dort zu den Schneidplatten geleitet.

Die Einleitung des Fluids erfolgt erfindungsgemäß über einen nicht-rotierenden Gleitring, einen ersten Ringkanal und einer axialen Bohrung in den Hohlrotor. Am anderen Ende des Hohlrotors wird wiederum über einen Ringkanal und im Wesentlichen strahlenförmigen Bohrungen das Fluid zu den Schneiden geleitet.

Vorteilhafte Ausgestaltungen und Ausführungsvarianten werden mit den Unteransprüchen offenbart.

Nach einer Ausführungsvariante weist der Wirbelapparat einen Hohlrotor auf, wobei in dem Hohlrotor mindestens eine Bohrung angebracht ist, mit welcher das Fluid zum Wirbelwerkzeug hin geleitet wird.

Nach einer weiteren Ausführungsvariante erfolgt bei einem solchen Wirbelapparat die Einleitung des Fluids in den Hohlrotor auf der dem Wirbelwerkzeug abgewandten Seite des Hohlrotors mittels eines Ringkanals und eines Gleitringes, wobei der Ringkanal am Außendurchmesser des Hohlrotors und der Gleitring an einem statischen Bauteil des Wirbelapparats angeordnet sein kann und umgekehrt.

Nach einer anderen Ausführungsvariante des Wirbelapparates mündet der Fluidfluss, von der Bohrung kommend, in einen Ringkanal des Wirbelwerkzeuges, von dem aus mindestens eine Bohrung im Wirbelwerkzeug zum Halbzeug/Werkzeug hin geführt ist.

Wobei nach einer Ausgestaltungsvariante diese Bohrung im Wesentlichen auf die Drehachse des Wirbelwerkzeuges ausgerichtet ist.

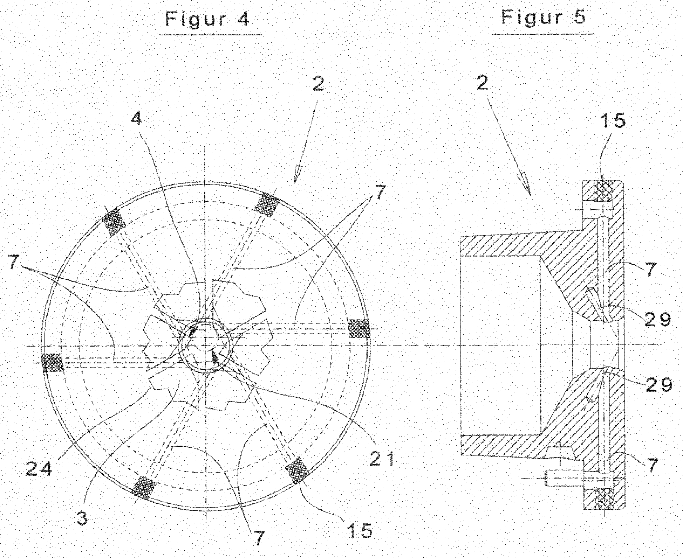

Und nach einer weiteren Ausgestaltungsvariante ist diese Bohrung im Wesentlichen auf die aktive Spanfläche der Schneidplatte oder auf die aktive Spitze der Schneide ausgerichtet, entsprechend der schematischen Darstellung in Figur 4.

Gemäß einer weiteren Ausgestaltungsvariante ist bei dem Wirbelapparat nach der Erfindung noch vorgesehen, dass die Richtung dieser Bohrung auch eine axiale Komponente aufweist, entsprechend der schematischen Darstellung in Figur 5.

Nach einer anderen Ausgestaltungsvariante des Wirbelapparats ist das der Schneidplatte zugewandte Ende dieser Bohrung mit einer Düse versehen.

Das Fluid besteht aus Öl und/oder Schneidöl und/oder Wasser und/oder Bohrmilch und/oder Luft.

Bei einer weiteren Ausführungsvariante des neuen Wirbelapparates ist vorgesehen, dass das Wirbelwerkzeug über einen Konus, einer Plananlagefläche und Spannschrauben in dem Hohlrotor gehalten und zentriert wird; vorzugsweise sind die Spannschrauben radial angeordnet.

Nach einer weiteren, die grundlegende erfinderische Lösung und ihre Ausführungsvarianten ergänzende Ausgestaltung sind außerhalb des Hohlrotors des Wirbelapparates weitere Fluidleitungen angeordnet, vorzugsweise sind diese weiteren Fluidleitungen als starre Rohre oder flexible Leitungen ausgebildet.

Nachfolgend wird die Erfindung anhand von in Figuren gezeigten schematischen Darstellungen näher bzw. in weiteren Details erläutert. Es zeigen:
- Figur 1: einen Schnitt durch einen erfindungsgemäßen Wirbelapparat;
- Figur 2: einen Schnitt durch ein erfindungsgemäßes Wirbelwerkzeug;
- Figur 3: die Draufsicht zu Figur 2;
- Figur 4: einen Schnitt durch eine weitere Ausführungsform eines Wirbelwerkzeuges;
- Figur 5: eine Draufsicht von einer weiteren Ausführungsform eines Wirbelwerkzeuges;
- Figur 6: einen schematischen Aufbau einer Werkzeugmaschine mit einer Werkzeugaufnahme mit einem Werkzeughalter;
- Figur 7: einen schematischen Aufbau einer Werkzeugmaschine mit einer Werkzeugaufnahme mit einem Werkzeughalter und einem Werkzeugträger;
- Figur 7a: einen schematischen Aufbau einer Werkzeugmaschine mit einer Werkzeugaufnahme mit einem Werkzeughalter und einem gegenüber angeordneten Werkzeugträger.

Zunächst wird vorausgeschickt, dass Begriffe wie "links", "rechts", "oben" oder "unten" sich lediglich auf die Darstellung in den Figuren beziehen, aber von der tatsächlichen Anordnung in der Praxis abweichen können. Weiterhin soll darauf hingewiesen werden, dass die Figuren keine reinen technischen Zeichnungen sind, weshalb teilweise Schraffuren und Abbruchlinien fehlen. Auch können die relativen Dimensionen von der Wirklichkeit abweichen. In der Beschreibung nicht erwähnter Bezugszeichen werden durch die Bezugszeichenliste definiert. Die Bezugszeichen haben in allen Figuren die gleiche Bedeutung.

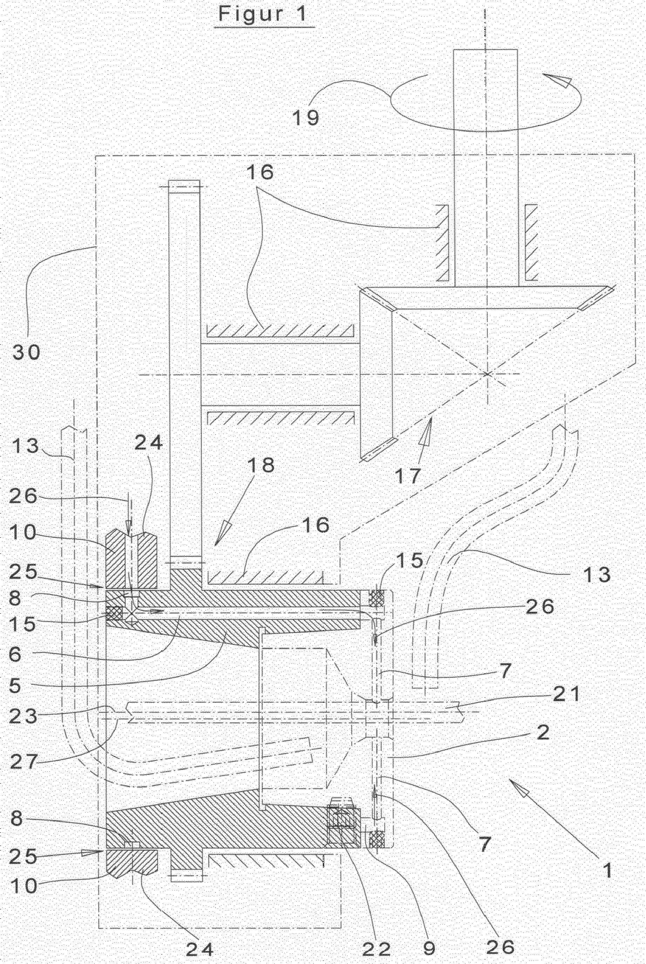

In der Figur 1 werden aus Gründen der Übersichtlichkeit nur die wesentlichen Bauteile eines erfinderischen Wirbelapparates 1 gezeigt. Das Gehäuse wurde nur leicht angedeutet; vorhandene Dichtungen wurden generell weggelassen. Auch die Lagerstellen 16 sind nur symbolisch dargestellt.

Bei dem Wirbelapparat 1 erfolgt der Kraftfluss von einem Antrieb 19, über ein Winkelgetriebe 17, über ein Stirnradgetriebe 18 zum Hohlrotor 5. Linksseitig weist der Hohlrotor 5 eine sich erweiternde Öffnung auf. Rechtsseitig, an der Stirn des Hohlrotors 5 und in seinem Inneren ist ein Wirbelwerkzeug 2 angeordnet.

Zur sprachlichen Klarstellung sei erwähnt, dass Wirbelwerkzeuge zum Teil auch Werkzeughalter, Kassetten und Ringkassetten genannt werden.

Ein Fluidstrom 26 strömt aus einem feststehenden, also nicht rotierenden Kanal in einen Ringkanal 8 des Wirbelwerkzeuges 2. Dieses Bauelement wird im Rahmen der Erfindung Gleitring 10 genannt.

Zwischen dem Gleitring 10 und dem Hohlrotor 5 befindet sich ein Spalt 25, der hier aus Gründen der Veranschaulichung übertrieben breit dargestellt wurde. Der Spalt 25 weist zwar an seinem linken und rechten Ende vorzugsweise jeweils eine Ring-Dichtung auf, die Dichtungen wurden aber - wie bereits erwähnt - allesamt in den Figuren weggelassen.

Über eine kleine senkrechte Bohrung gelangt hier das Fluid in mindestens eine axiale Bohrung 6 des Wirbelwerkzeuges 2. Je nach den geometrischen Gegebenheiten im Hohlrotor 5 kann diese Bohrung 6 auch geknickt (von zwei Seiten gebohrt) oder auch nichtparallel zur Drehachse 27 des Wirbelwerkzeuges 2 angeordnet sein.

In einer anderen Ausgestaltung der Erfindung kann der Ringkanal 8 auch so tief beschaffen sein, dass es keiner kleinen senkrechten Bohrung bedarf. Auch kann es sein, dass der Ringkanal 8 konstruktiv in den Gleitring 10 verlagert ist.

Der Übergang des Fluids von der Bohrung 6 zum Wirbelwerkzeug 2 erfolgt wiederum über einen Ringkanal, den Ringkanal 9. Mindestens eine zur Drehachse 27 des Wirbelwerkzeuges 2 zuweisende Bohrung 7 leitet dann das Fluid zu den hier nicht dargestellten Schneidplatten 3.

Trotz der Vereinfachung der Zeichnung kann man in der Figur 1 gut erkennen, dass die Zuführung eines Fluids nach dem Stand der Technik mittels der Fluidleitungen 13 besonders viel Platz benötigt. Bei der linken Version - einem feststehenden Rohr 13 und der Hineinführung in in den Wirbelapparat bzw. Heranführen an das Wirbelwerkzeug 2 - muss im Wirbelapparat 1 viel Platz für das Rohr 13 und das Werkstück 21 vorhanden sein.

Bei der rechten Version - einem flexiblem Spiralschlauch 13 - bleibt man zwar außerhalb des Wirbelapparates 1, aber bei beiden Versionen kommt man nicht richtig an die Zerspanungsstelle / -stellen heran.

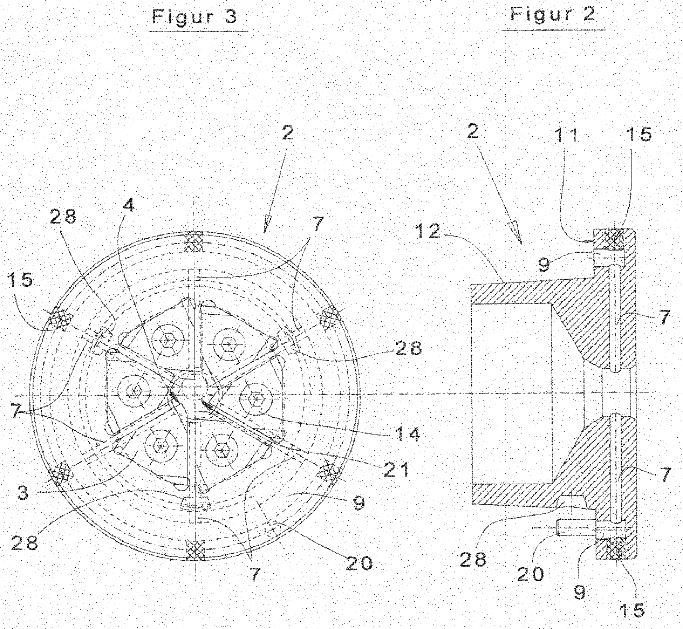

Ferner ist in der Figur 1 noch zu sehen, dass die Bohrungen 6 und 7 mittels Stopfen 15 nach deren Herstellung, z.B. durch Bohren, wieder verschlossen werden. Mittels dieser Methode - wie an sich bekannt - kann man von gut zugänglichen Stellen aus Bohrungen anlegen und danach das unerwünschte offene Ende der Bohrung verschließen. Zudem kann man in dieser Figur 1 auch noch sehen, dass das Wirbelwerkzeug 2 mittels radial wirkender Spannschrauben 22 (um 3*120° versetzt) im Hohlrotor 5 gehalten und zentriert wird (hierzu mehr in den Figuren 2 und 3).

In der Figur 2 ist das Wirbelwerkzeug 2 etwas deutlicher und im Schnitt zu sehen. Eine Besonderheit dieses Wirbelwerkzeuges 2 ist das präzise und bewährte Halten und Zentrieren mittels eines Konus 12, einer Planfläche 11 und der drei Spannschrauben 22, siehe Figur 1, am Wirbelapparat 1, die in Zentrierbohrungen 28 am Wirbelwerkzeug 2 eingreifen.

Ferner kann man auch einen Mitnehmerstift 20 erkennen, der in eine Ausnehmung des Wirbelapparates eingreift, bzw. eingreifen kann.

In der Figur 3 ist, hier erstmals auch, die Anordnung der Schneidplatten 3, die eigentlichen Schneidwerkzeuge, zu sehen, die mit ihren Schneiden 4 dem exzentrisch angeordneten Werkstück/Halbzeug 21 zugewandt sind. Bei dem hier gezeigten Beispiel weist jede Schneidplatte drei Schneiden auf, die bei Bedarf um 120° gedreht und so zum Schneid-Eingriff gebracht werden können. Die Schneidplatten 3 werden in Aussparungen der Stirnseite des Wirbelwerkzeuges 2 von Schneidplatten-Schrauben 14 gehalten. Vorzugsweisen werden dort Torx- oder InbusSchrauben verwendet. In der Figur 2 sind die Schneidplatten 3 deshalb nicht zu sehen, weil sie geringfügig außerhalb der Schnittebene angeordnet sind. In der Figur 3 kann man die exakte radiale Anordnung der Bohrungen 7 erkennen. Der Fluidstrahl geht hier also nicht exakt auf die Schneiden 4, bzw. auf die Spanfläche der Schneiden 3, sonders dorthin, wo sich in der Regel eine Spanansammlung bildet bzw. bilden kann.

In der Figur 4 sind aus Gründen der Übersichtlichkeit große Teile der Schneidplatten 3 weggelassen worden, was durch die Abbruchkanten 24 auch angezeigt wird. Aus diesem Grunde fehlen die Schneidplatten-Schrauben auch komplett. In der Figur 4 sind die Bohrungen 7 quasi direkt, vorzugsweise auf einen Randbereich der Schneidplatten, also im Wesentlichen auf die Schneiden 3 bzw. auf die Spanflächen der Schneiden 3 ausgerichtet. Im strengen Sinne betrachtet verlaufen die Bohrungen 7 also nicht strahlenförmig. Somit ist dieses eine weitere Ausgestaltung der Erfindung, welche den Vorteil hat, dass neben einer ausreichend guten Kühlung und Schmierung der Schneiden zugleich auch ein gutes Wegspülen (Herausspülen) der entstehenden Späne erfolgt.

In der Figur 5 kann im Rahmen der Erfindung der radialäußere Teil der Bohrungen in der Form verlaufen, wie er in den Figuren 3 und 4 gezeigt wird. Entscheidend ist hier jedoch, dass der radial-innere Teil der Bohrungen 7 eine axiale Komponente 29 aufweist, wodurch das strömende Fluid auch eine axiale Strömungskomponente aufweist. Diese erfindungsgemäße Ausgestaltung ist dann besonders vorteilhaft, wenn Späne aus dem Bereich der Schneiden 3 und dem engen Bereich des Wirbelwerkzeuges 2 besonders schnell herausgeschafft werden sollen.

Es versteht sich, dass an einem Wirbelwerkzeug 2 auch eine Kombination verschiedener Bohrungen 7 zum Einsatz kommen kann. Unabhängig von der Ausrichtung der Bohrungen 7, können die Bohrungen an ihrem radial inneren Ende mit einer Düse versehen sein.

Im Rahmen der Erfindung kann das Fluid aus Öl, aus Schneidöl, Wasser, Bohrmilch oder auch aus Luft beschaffen sein. Auch Kombinationen dieser Fluide sind möglich.

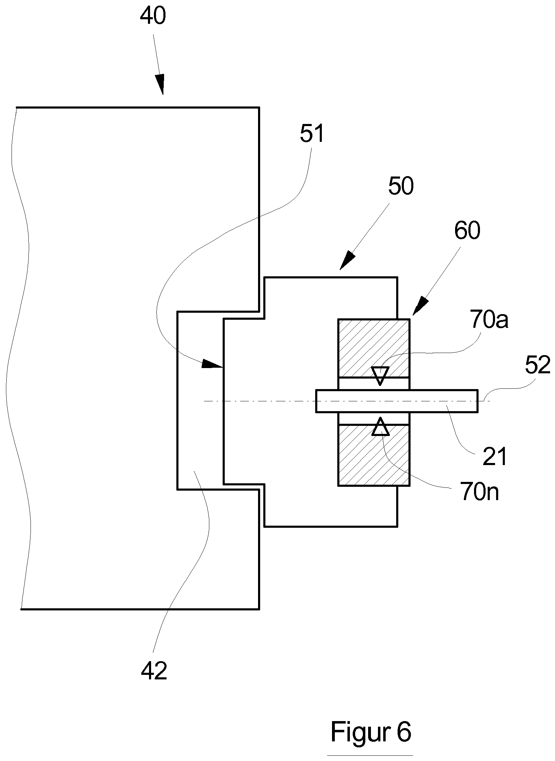

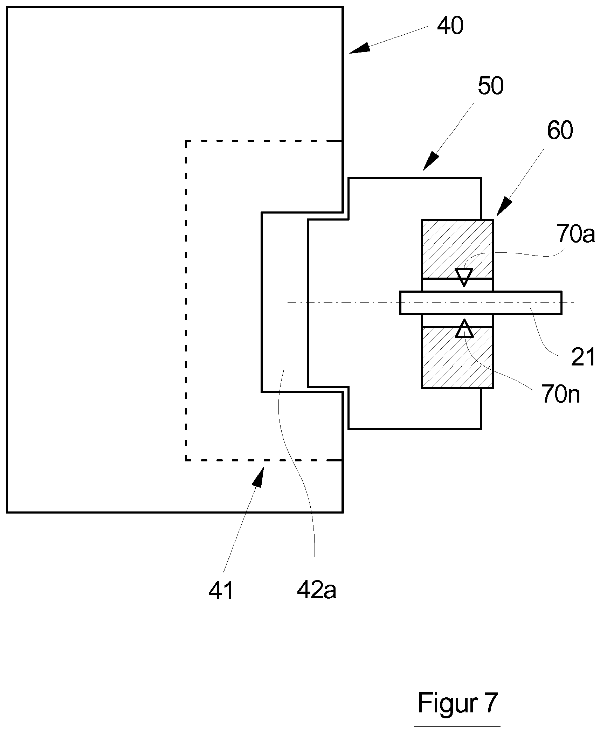

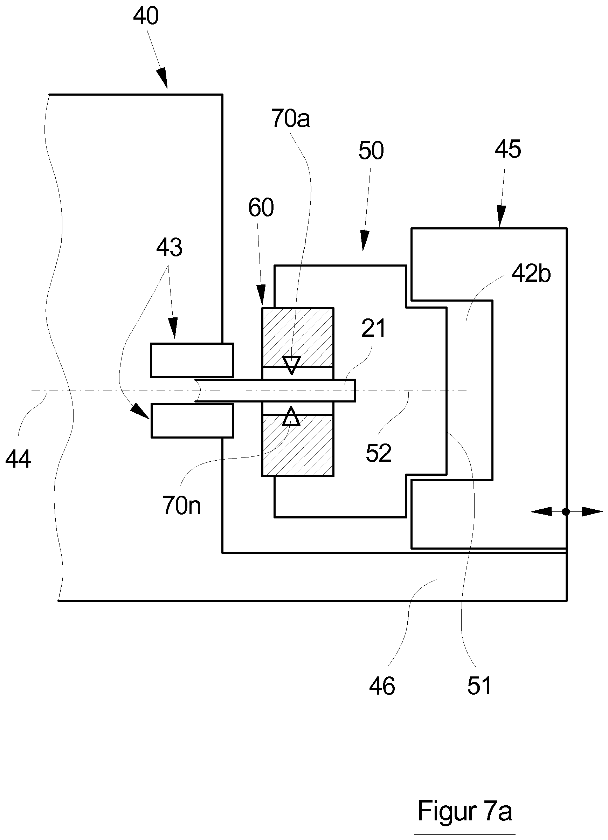

Zum Schluss soll noch erwähnt werden, dass die erfinderische Lösung der Führung und Leitung des Fluides in dem Wirbelapparat 1 nicht nur beim Gewindewirbeln, sondern kann auch beim Außendrehen, Einstechen, Abstechen, Schäldrehen, Rändeln usw. Anwendung finden kann. D. h. der Fluidstrahl der zum Kühlen und Schmieren dient, wird ebenfalls unmittelbar - d.h. auf weniger als 5 Millimeter Abstand - an die Schneidplatten 3 bzw. an die im Werkzeughalter 60 angeordneten Werkzeuge 70a bis 70n herangeführt. In den Figuren 6, 7 und 7a ist dies in stark schematisierter Darstellung gezeigt.

In einer Werkzeugmaschine 40 ist in einer Ausnehmung 42 eine Werkzeugaufnahme 50 (z.B. ein Wirbelapparat) mit ihrem Zapfen 51 eingesetzt und gehalten. In der Werkzeugaufnahme 50 ist ein Werkzeughalter 60 positioniert und arretiert. In dem Werkzeughalter 60 sind die Werkzeuge 70a bis 70n angeordnet, mit welchen das Werkstück 21 bearbeitet wird. Mit der Bezugsziffer 52 ist die Rotationsachse des Werkzeughalters 60 und/oder der Werkzeugaufnahme 50 bezeichnet also quasi die Rotationsachse der Werkzeuge 70a bis 70n.

Die in Figur 7 gezeigte Ausführungsvariante unterscheidet sich dahingehend von der Ausführungsvariante nach Figur 6, das in dem Ausführungsbeispiel nach der Figur 7 zwischen der Werkzeugmaschine 40 und der Werkzeugaufnahme 50 noch ein Werkzeugträger 41 angeordnet ist. Dieser Werkzeugträger 41 kann ein Werkzeug-Revolverkopf oder eine ähnliche Baugruppe zur Positionierung und Halterung einer Werkzeugaufnahme 50 oder eines Werkzeughalters 60 an einer Werkzeugmaschine 40 sein.

Die erfindungsgemäße Führung des Fluidstromes zur Zerspannungsstelle hin, genauer gesagt die Anordnung und Ausrichtung der hierzu notwendigen Elemente/Mittel sind in der Werkzeugaufnahme 50 und/oder dem Werkzeughalter 60 angeordnet.

In der Figur 7a ist der Werkzeughalter 60 zwischen der Werkzeugmaschine 40 und einem Werkzeugträger 45, welche an der Werkzeugmaschine 40 eine andere Anordnung hat, angeordnet. Diese verschiedenen Bauformen sind wichtig zu erwähnen, da die erfinderische Lösung nicht nur auf einen Werkzeugmaschinentyp beschränkt sein soll.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

So kann eine Werkzeugmaschine für die spanabhebende Bearbeitung von Werkstücken durch die Verwendung eines Wirbelapparats, welcher die Merkmale nach wenigstens einem der Ansprüche 1 bis 11 aufweist, gekennzeichnet sein.

Eine weitere, derartige Kombination erfindungsgemäßer Merkmale ist, dass sich eine Werkzeugmaschine für die spanabhebende Bearbeitung von Werkstücken durch die Verwendung einer Werkzeugaufnahme, welche die Merkmale des Anspruches 12 besitzt, auszeichnet.

Eine andere weitere Kombination erfindungsgemäßer Merkmale ist eine Vorrichtung, welche zur Weiterleitung eines Fluides, welches an einer spanabhebenden Werkzeugmaschine bereitgestellt ist, zu einem an dieser Werkzeugmaschine in Einsatz befindlichen Schneidwerkzeug hin dient, welches in einem Werkzeughalter gehalten ist, welcher in einer Werkzeugaufnahme der Werkzeugmaschine zeitweise positioniert und gehalten ist, wobei das Fluid über sich drehende und über statische Bauteile der Werkzeugaufnahme und/oder des Werkzeughalters zu dem Schneidwerkzeug hin geleitet wird, wobei die Werkzeugaufnahme oder wenigstens ein Teil der Werkzeugaufnahme diese Vorrichtung bildet oder, wobei der Werkzeughalter oder wenigstens ein Teil des Werkzeughalters diese Vorrichtung bildet oder, wobei die Werkzeugaufnahme und der Werkzeughalter oder wenigstens ein Teil der Werkzeugaufnahme und wenigstens ein Teil des Werkzeughalters diese Vorrichtung bilden.

### Bezugszeichenliste

- 1: Wirbelapparat
- 2: Wirbelwerkzeug
- 3: Schneidplatte
- 4: Schneide
- 5: Hohlrotor
- 6: Bohrung im Hohlrotor
- 7: Bohrung im Wirbelwerkzeug
- 8: Ringkanal (dem Werkzeug abgewandt)
- 9: Ringkanal (im Wirbelwerkzeug)
- 10: Gleitring
- 11: Plananlagefläche
- 12: Konus
- 13: weitere Fluidleitung
- 14: Schneidplatten-Schraube (Torx, Inbus)
- 15: Stopfen
- 16: Lager
- 17: Winkelgetriebe
- 18: Stirnradgetriebe
- 19: Antrieb
- 20: Mitnehmerstift
- 21: Halbzeug/Werkstück
- 22: Spannschraube
- 23: Mittelachse des Halbzeuges/Werkstückes
- 24: Abbruchlinie
- 25: Spalt (übertrieben dargestellt)
- 26: Fluidstrom
- 27: Drehachse des Wirbelwerkzeuges
- 28: Zentrierbohrung für Spannschrauben
- 29: axiale Komponente einer Bohrung 7
- 30: Gehäuse
- 40: Werkzeugmaschine
- 41: Werkzeugträger (von Pos. 40)
- 42: Ausnehmung (zur Aufnahme von Pos. 51 bzw. Pos. 50)
- 42a: Ausnehmung (in Pos. 41 zur Aufnahme von Pos. 51 bzw. Pos. 50)
- 42b: Ausnehmung (in Pos. 45 zur Aufnahme von Pos. 51 bzw. Pos. 50)
- 43: Spanneinheit (von Pos. 40 für Pos. 21)
- 44: Rotationsachse (von Pos. 43)
- 45: Werkzeugträger (von Pos. 40, in einer weiteren Anordnung)
- 46: Gestellteil (von Pos. 40)
- 50: Werkzeugaufnahme
- 51: Zapfen
- 52: Rotationsachse (von Pos. 60 und/oder Pos. 50)
- 60: Werkzeughalter
- 70a: Werkzeug (Schneid-Werkzeug)
- 70n: Werkzeug (Schneid-Werkzeug)

## Patentansprüche

1. Wirbelapparat (1) für eine spanabhebende Werkzeugmaschine mit einem Gehäuse, mindestens einer Getriebestufe, Lagern und Dichtungen, wobei der Wirbelapparat (1) ein Wirbelwerkzeug (2) mit Schneidplatten (3) aufweist, deren aktive Werkzeugschneiden (4) zur Außenbearbeitung eines Halbzeuges (21), vorzugsweise eines zylindrischen Halbzeuges (21), nach radial innen gerichtet sind, wobei ein Fluid zur Kühlung und/oder Schmierung zu den Schneideplatten (3) geführt wird,
**dadurch gekennzeichnet, dass**
das Fluid über sich drehende und über statische Bauteile des Wirbelapparates (1) in das Wirbelwerkzeug (2) und von dort zu den Schneidplatten (3) geleitet wird.

2. Wirbelapparat (1) nach Anspruch 1,
**dadurch gekennzeichnet, dass**
der Wirbelapparat (1) einen Hohlrotor (5) aufweist und dass in dem Hohlrotor (5) mindestens eine Bohrung (6) angebracht ist, die das Fluid zum Wirbelwerkzeug (2) leitet.

3. Wirbelapparat (1) nach Anspruch 1 oder 2,
**dadurch gekennzeichnet, dass**
die Einleitung des Fluids in den Hohlrotor (5) auf der dem Wirbelwerkzeug (2) abgewandten Seite des Hohlrotors (5) mittels eines Ringkanals (8) und eines Gleitringes (10) erfolgt, wobei der Ringkanal (8) am Außendurchmesser des Hohlrotors (5) und der Gleitring (10) an einem statischen Bauteil angeordnet sein kann oder umgekehrt.

4. Wirbelapparat (1) nach mindestens einem der Ansprüche 1 bis 3,
**dadurch gekennzeichnet, dass**
der Fluidfluss (26), von der Bohrung (6) kommend, in einen Ringkanal (9) des Wirbelwerkzeuges (2) mündet, von dem aus mindestens eine Bohrung (7) im Wirbelwerkzeug (2)zum Halbzeug/Werkzeug (21) führt.

5. Wirbelapparat (1) nach Anspruch 4,
**dadurch gekennzeichnet, dass**
die Bohrung (7) im Wesentlichen auf die Drehachse (27) des Wirbelwerkzeuges (2) ausgerichtet ist.

6. Wirbelapparat (1) nach Anspruch 4,
**dadurch gekennzeichnet, dass**
die Bohrung (7) im Wesentlichen auf die aktive Spanfläche der Schneidplatte (3) oder auf die aktive Spitze der Schneide (4) ausgerichtet ist (gemäß Figur 4).

7. Wirbelapparat (1) nach Anspruch 4, 5 oder 6,
**dadurch gekennzeichnet, dass**
die Richtung der Bohrung (7) auch eine axiale Komponente (29) aufweist (gemäß Figur 5).

8. Wirbelapparat (1) nach einem der Ansprüche 4 bis 7,
**dadurch gekennzeichnet, dass**
das der Schneidplatte (3) zugewandte Ende der Bohrung (7) mit einer Düse versehen ist.

9. Wirbelapparat (1) nach einem der Ansprüche 1 bis 8,
**dadurch gekennzeichnet, dass**
das Fluid aus Öl, Schneidöl, Wasser, Bohrmilch oder Luft besteht.

10. Wirbelapparat (1) nach wenigstens einem der Ansprüche 1 bis 9,
**dadurch gekennzeichnet, dass**
das Wirbelwerkzeug (2) über einen Konus (12), einer Plananlagefläche (11) und Spannschrauben (22) in dem Hohlrotor (5) gehalten und zentriert wird; vorzugsweise sind die Spannschrauben (22) radial angeordnet.

11. Wirbelapparat (1) nach einem der Ansprüche 1 bis 11,
**dadurch gekennzeichnet, dass**
außerhalb des Hohlrotors (5) weitere Fluidleitungen (13) angeordnet sind, vorzugsweise sind die weiteren Fluidleitungen (13) als starre Rohre oder flexible Leitungen ausgestaltet.

12. Werkzeugaufnahme (50) für eine spanabhebende Werkzeugmaschine (40) mit einem Gehäuse, mindestens einer Getriebestufe, Lagern und Dichtungen, wobei die Werkzeugaufnahme (50) ein Werkzeughalter (60) mit Schneidplatten (3) bzw. Werkzeugen (70a, 70n) aufweist, deren aktive Werkzeugschneiden (4) zur Außenbearbeitung eines Halbzeuges (21), vorzugsweise eines zylindrischen Halbzeuges (21), nach radial innen gerichtet sind, wobei ein Fluid zur Kühlung und/oder Schmierung zu den Werkzeugen (70a, 70n) geführt wird,
**dadurch gekennzeichnet, dass**
das Fluid über sich drehende und über statische Bauteile der Werkzeugaufnahme (50) in den Werkzeughalter (60) und von dort zu den Schneidplatten (3) bzw. Werkzeugen (70a, 70n) geleitet wird.

13. Werkzeugmaschine (40) für die spanabhebende Bearbeitung von Werkstücken, **gekennzeichnet durch** die Verwendung eines Wirbelapparats (1) nach wenigstens einem der Ansprüche 1 bis 11.

14. Werkzeugmaschine (40) für die spanabhebende Bearbeitung von Werkstücken, **gekennzeichnet durch** die Verwendung einer Werkzeugaufnahme (50) nach Anspruch 12.

15. Vorrichtung zur Weiterleitung eines Fluides, welches an einer spanabhebenden Werkzeugmaschine bereitgestellt ist, zu einem an dieser Werkzeugmaschine in Einsatz befindlichen Schneidwerkzeug hin, welches in einem Werkzeughalter gehalten ist, welcher in einer Werkzeugaufnahme der Werkzeugmaschine zeitweise positioniert und gehalten ist,
**dadurch gekennzeichnet, dass**
das Fluid über sich drehende und über statische Bauteile der Werkzeugaufnahme und/oder des Werkzeughalters zu dem Schneidwerkzeug hin geleitet wird, wobei die Werkzeugaufnahme oder wenigstens ein Teil der Werkzeugaufnahme diese Vorrichtung bildet oder, wobei der Werkzeughalter oder wenigstens ein Teil des Werkzeughalters diese Vorrichtung bildet oder, wobei die Werkzeugaufnahme und der Werkzeughalter oder wenigstens ein Teil der Werkzeugaufnahme und wenigstens ein Teil des Werkzeughalters diese Vorrichtung bilden.
